# EUROPÄISCHE PATENTSCHRIFT

(11) **EP 0 993 577 B1**
(45) Veröffentlichungstag und Bekanntmachung des Hinweises auf die Patenterteilung: **26.09.2001**
(21) Anmeldenummer: 98944979.8
(22) Anmeldetag: 04.07.1998
(51) Int. Cl.: F16L 37/12, F16L 27/04, F16L 23/036, F01N 7/18

(54) **FEDEREINRICHTUNG ZUM VERBINDEN ZWEIER FLANSCHE**
SPRING SYSTEM FOR CONNECTING TWO FLANGES
SYSTEME DE RESSORT POUR RELIER DEUX FLASQUES

(30) Priorität: 07.07.1997 DE 19728973
(43) Veröffentlichungstag der Anmeldung: 19.04.2000
(73) Patentinhaber: Christian Bauer GmbH & Co., 73642 Welzheim (DE); DaimlerChrysler AG, 70546 Stuttgart (DE)
(72) Erfinder: FADINI, Rolf, D-71397 Leutenbach (DE); HUTT, Helmut, D-73642 Welzheim (DE); KÄSTNER, August, D-73642 Welzheim (DE)
(74) Vertreter: Patentanwalts-Partnerschaft Rotermund + Pfusch
(86) Internationale Anmeldenummer: DE9801927
(87) Internationale Veröffentlichungsnummer: WO9902912

(56) Entgegenhaltungen:
- DE-A- 2 627 375
- DE-B- 1 187 437
- FR-A- 2 315 605
- US-A- 3 881 753
- US-A- 5 350 201

## Beschreibung

Die Erfindung betrifft eine Federeinrichtung zum Verbinden zweier Flansche nach dem Oberbegriff des Patentanspruchs 1.

Solche aus DE 41 01 849 A1 und DE-B-1 187 437 bekannte Federeinrichtungen sind für hohe Verbindungskräfte ungeeignet. Dabei bietet die Einrichtung nach DE 41 01 849 A1 zudem ohne zusätzliche Arretiermittel keinen sicheren Halt an den Flanschen. Die Einrichtung nach DE-B-1 187 437 ist bezüglich Ihres Aufbaus und Ihrer Wirkung einer mit einer Spannfeder arbeitenden Wäscheklammer vergleichbar. Deren Aufbau ist kompliziert und die mit der Spannfeder aufbringbaren Spannkräfte sind ohne die Aufwendung eines für solche Teile wirtschaftlich nicht mehr vertretbaren Aufwandes eng begrenzt.

Aus der DE 44 44 550 A1 ist eine Federeinrichtung bekannt, bei der die miteinander zu verbindenden Flansche zwischen zwei gegeneinander verspannten Tellerfedern miteinander kraft- und formschlüssig verbunden sind. Mindestens die Stirnfläche an einem der beiden miteinander verbundenen Flansche, an dem eine der beiden Tellerfedern anliegt, ist umlaufend sphärisch ausgebildet. Darüber hinaus können jene Flansche miteinander in der Art eines Kugelgelenkes verbunden sein. Die Flansche befinden sich jeweils an den Enden einer Leitung, die über die Flansche miteinander zu verbinden sind. Jene Tellerfeder-Verbindungseinrichtung ist kompliziert zu montieren. Darüber hinaus können die Tellerfedern bei Leitungen, die über Flansche miteinander verbunden sind, nicht zerstörungsfrei von den Leitungsenden für einen Austausch entfernt werden, wenn die Leitungen beispielsweise bei der Abgasanlage eines Kraftfahrzeuges fest eingebaut sind. Das Anwendungsgebiet entspricht allerdings demjenigen, auf das sich die Erfindung gattungsmäßig bezieht. Insbesondere sind die Verbindungskräfte und der bei jener bekannten Einrichtung mögliche Winkelversatz, unter dem die Leitungen und damit deren Flansche miteinander verbunden werden können, mit den Anforderungen, die an eine erfindungsgemäße Verbindung gestellt sind, von vergleichbarer Art und Größe.

Die Erfindung beschäftigt sich mit dem Problem, eine leicht montier- und austausch- sowie kostengünstig herstellbare Federeinrichtung zu schaffen, die insbesondere ohne zusätzliche Hilfsmittel eine ausreichende Spannkraft erzeugt und einen sicheren Halt gewährleistet.

Gelöst wird dieses Problem durch eine gattungsgemäße Federeinrichtung mit den kennzeichnenden Merkmalen des Patentanspruchs 1.

Eine solche Federeinrichtung kann auf einfache Weise seitlich radial an den Stirnseiten der miteinander zu verbindenden Flansche aufgeschoben werden und ist damit auch jederzeit ohne weiteres durch einfaches Abziehen austauschbar.

Es liegt eine Federklemme vor, die in montiertem Zustand in unterschiedlichen Richtungen klemmend wirkt bzw. wirken kann. Dabei bewirkt die Klemmwirkung in der einen Richtung ein Gegeneinanderdrücken der in der Klammer eingespannten Flansche und die Klemmwirkung in der anderen Richtung ein Aufklemmen auf die an die zu verbindenden Flansche angrenzenden und mit diesen verbundenen Leitungen, die vorzugsweise Zylinderrohre sind. Die in zwei unterschiedliche Richtungen ausgerichteten Federwirkungen können beliebig unterschiedlich groß sein.

Die Schenkel der Klemmbacken besitzen lediglich eng begrenzte Bereiche, in denen sie an den Flanschen bzw. an den mit diesen verbundenen Leitungen anliegen. Derartige geringe Kontaktflächen ermöglichen einen sicheren Halt und schützen die Federeinrichtung bei heißen Flanschen bzw. mit diesen verbundenen Leitungen vor einem hohen Wärmefluß in die Federeinrichtung. Die lokal begrenzten Anlagebereiche haben praktisch die Funktion einer Wärmedrossel. Ein geringer Wärmefluß in das Federelement verhindert eine übermäßige Erwärmung des Federelementes bei hohen Temperaturen der durch das Federelement zu verbindenden Teile. Niedrige Temperaturen an der Federeinrichtung sind wichtig, da die Federkraft bei gleichem Federmaterial mit steigender Temperatur abnimmt.

Eine Federeinrichtung mit in zwei unterschiedlichen Richtungen klemmend wirkenden Schenkeln ihrer Klemmbacken ist in dieser Form praktisch notwendig, wenn die Klemmbacken-Schenkel lokal begrenzt auf einer sphärischen Anlagefläche der Flansche aufliegen, die von einem Ringstreifen aus einer Kugeloberfläche gebildet ist. Die einzelnen Anlagebereiche der Schenkel einer Klemmbacke liegen dabei auf dem gleichen umlaufenden Ringstreifen an. Verändert sich in gespanntem Zustand der Federeinrichtung, das heißt bei auf die zu verbindenden Flansche aufgezogenem Zustand, der Abstand der Schenkel der funktionell ersten Klemmbacken durch eine Schwenkbewegung zwischen den beiden ersten Klemmbacken, so verändert sich durch die Doppel-Klemmwirkung der Federeinrichtung aufgrund der Anlage der einzelnen Schenkel auf einem sphärischen Ringsegment auch der Abstand zwischen den U-Schenkeln der funktionell zweiten Klemmbacken.

Für eine statisch einwandfreie Ausrichtung der Federeinrichtung an den Auflagen miteinander zu verbindender Flansche, insbesondere solcher Flansche, bei denen zumindest eine Flanschauflagefläche sphärisch ausgebildet ist, kann es zweckmäßig sein, daß an jeweils einer der funktionell ersten und/oder zweiten Klemmbacken eine unterschiedliche Anzahl von Anlagebereichen vorgesehen ist.

Die Anlagebereiche bei den Klemmbacken sind jeweils so gelegt, daß in Aufsteckrichtung der Federeinrichtung eine Art Aufschnappen am Umfang der über die Flansche miteinander zu verbindenden Teile, die insbesondere Rohre sind, erfolgen kann. Durch dieses radiale Aufschnappen ist eine Abrutschsicherung gegeben.

Ein nachfolgend noch näher beschriebenes Ausführungsbeispiel ist in der Zeichnung dargestellt.

Es zeigen
- Fig. 1: eine Ansicht auf den Rückenbereich einer Klemmbakken-Federeinrichtung mit einem strichpunktiert angedeuteten Flansch an dem Ende einer Rohrleitung,
- Fig. 2: einen Schnitt durch die Federeinrichtung nach Linie II-II in Fig. 1,
- Fig. 3: einen Schnitt durch die Federeinrichtung nach Linie III-III in Fig. 1.

Eine Federeinrichtung aus Federstahl besteht aus einer funktionell ersten Klammer mit funktionell ersten Klemmbacken 1 in einer Klemmebene 100 und Klemmbacken 2 in einer Klemmebene 200, die um eine erste Schwenkachse S1 gegeneinander in einem Federrückenbereich 3 unter elastischer Materialverformung schwenkbar sind. Die beiden Klemmebenen 100 und 200 verlaufen etwa parallel zueinander.

Eine funktionell zweite Klammer wird von einem Paar funktionell zweiter Klemmbacken 4 in einer Klemmebene 400 und Klemmbacken 5 in einer Klemmebene 500 gebildet, die unter elastischer Materialverformung um eine Schwenkachse S2 schwenkbar sind. Die beiden Klemmebenen 400 und 500 verlaufen ebenfalls etwa parallel zueinander.

Die beiden funktionell ersten Klemmbacken 1 und 2 besitzen jeweils an ihre Schwenkachse S1 angrenzende U-Schenkel 6 und 7. Diese U-Schenkel bilden gleichzeitig die funktionell zweiten Klemmbacken 4, 5, wobei dann jeweils U-Schenkel 6 bzw. 7 in der Schwenkachse S2 zusammentreffen.

An den U-Schenkeln 7 sind jeweils zwei Anlagestege 8 angeformt. Die Anlagestege 8 besitzen auf einem jeweils zugeordneten U-Schenkel 7 einen solchen Abstand zueinander, daß die zwei gegenüberliegenden U-Schenkel 7 radial auf einen zylindrischen Körper für eine stabile Lage aufschnappbar sind. An den U-Schenkeln 6 der gegenüberliegenden funktionell ersten Klemmbacke 1 sind Sicken 9 als lokale Anlagebereiche eingeformt.

Bei den U-Schenkeln 6 der funktionell zweiten Klemmbacken 4, 5 ist jeweils je Klemmbacke ein lokal begrenzter, potentieller Anlagebereich 10 angeformt, der auch entfallen kann.

Mit der beschriebenen Federeinrichtung können zwei Rohrleitungen 11, 12 über ihre jeweiligen Flansche 13, 14 fest miteinander verbunden werden. Die Federeinrichtung ist so ausgelegt, daß insbesondere die funktionell ersten Klemmbacken 1, 2 unter hoher Vorspannung beim Aufziehen der Federeinrichtung auf die miteinander zu verbindenden Flansche 13, 14 stehen. Dadurch werden die Flansche 13, 14 durch die auffedernden Klemmbacken mit für eine feste Verbindung ausreichender Kraft zusammengedrückt.

Zumindest der Flansch 13 ist auf seiner stirnseitigen Anlagefläche für die Auflage der betreffenden U-Schenkel 7 sphärisch in der Form eines umlaufenden Ringstreifens 15 ausgebildet.

Die Anlagestege 8 liegen an dem sphärisch geformten Ringstreifen 15 an und sorgen sowohl für die Übertragung der axialen Verbindungskraft als auch für die radiale Fixierung der Federeinrichtung. Für die radiale Fixierung der Federeinrichtung reicht bereits eine Anlage an derart angebrachten Anlagebereichen 8 eines einzigen U-Schenkels, nämlich des U-Schenkels 7, aus.

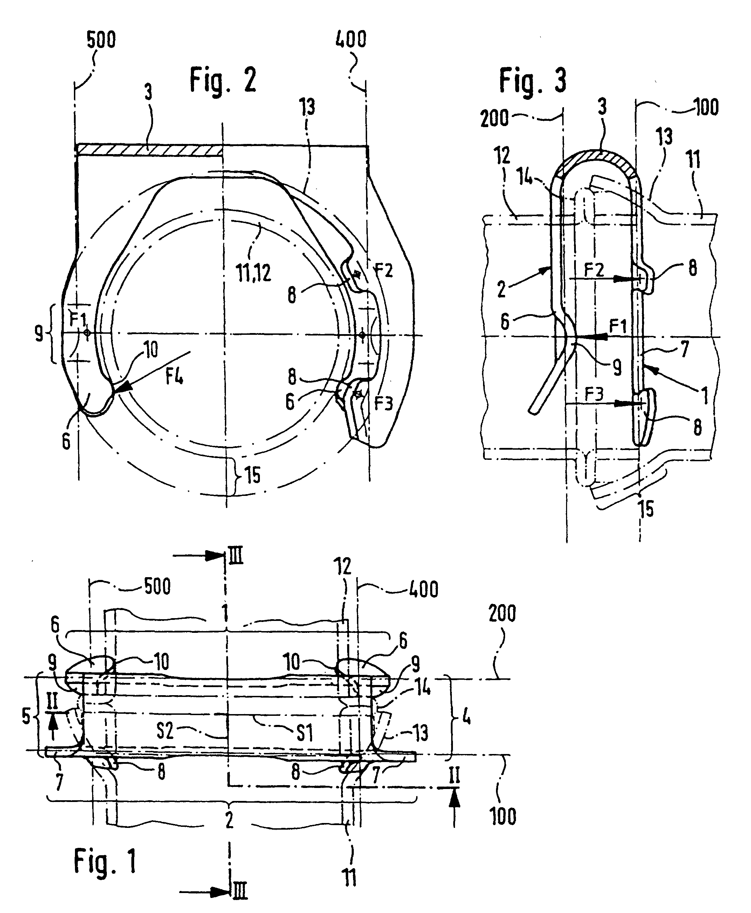

An den Kontaktstellen der Anlagestege 8 sowie der Sicken 9 wirken Kräfte. Die bei der Verbindung der Flansche 13, 14 wirkenden Kräfte sind in den Fig. 2 und 3 durch ihre Axialkomponenten F1, F2 und F3 angedeutet.

Die U-Schenkel 6 der Federeinrichtung können so gestaltet sein, daß im montierten Zustand die potentiellen Anlagebreiche 10 den Umfang der zugeordneten Rohrleitung 12 mit der Kraft F4 kontaktiert. Erforderlich ist ein derartiger Kontakt bei dem vorliegenden Ausführungsbeispiel nicht.

## Patentansprüche

1. Federeinrichtung zum Verbinden zweier Flansche an insbesondere den Enden miteinander zu verbindender Rohrleitungen, insbesondere zweier Rohrleitungen einer Kraftfahrzeug-Abgasanlage, mit folgenden Merkmalen
- die Federeinrichtung ist als eine elastisch biegsame Klammer mit U-förmigen, sich gegenüberliegenden, funktionell ersten und zweiten Klemmbacken (1, 2) beziehungsweise (4, 5) ausgebildet,
- die U-Schenkel (6, 7) der funktionell ersten Klemmbacken (1 beziehungsweise 2) liegen in zwei im wesentlichen parallel zueinander verlaufenden Klemmebenen (100, 200) der Klemmbacke (1 beziehungsweise 2),
- die U-Schenkel (6, 7) der funktionell zweiten Klemmbacken (4 beziehungsweise 5) liegen in zwei im wesentlichen parallel zueinander verlaufenden Klemmebenen (400, 500) der zweiten Klemmbacken (4 beziehungsweise 5),
- die Federeinrichtung ist einteilig mit einem Federrückenbereich (3) ausgebildet und besteht ausschließlich aus der elastisch biegsamen Klammer,
- die ersten und zweiten Klemmbacken (1, 2 beziehungsweise 4, 5) besitzen jeweils Schwenkachsen (S1 beziehungsweise S2), die sich in dem Federrückenbereich (3) rechtwinklig in einer gemeinsamen Ebene kreuzen,
- die Klammer ist bei aufgeweitetem Zustand durch Verschwenken um die Schwenkachse S1 der funktionell ersten Klemmbakken (1, 2) sowie zumindest einer der funktionell zweiten Klemmbacken (4, 5) durch Verschwenken um die Schwenkachse (S2) auf die gegeneinander abgewandten Stirnflächen der Flansche (13, 14) mit für die Flanschverbindung gewünschter Spannkraft aufschiebbar,
- die U-Schenkel (6, 7) der Klemmbacken (1, 2; 4, 5) für die ersten und/oder zweite Funktion dieser Klemmbacken (1, 2; 4, 5) in den jeweiligen Klemmebenen (100, 200, 400 und 500) besitzen lediglich lokal eng begrenzte Bereiche (8, 9, 10) für eine direkte Anlage an die durch die Klammer miteinander zu verbindenden Teile (11, 13; 12, 14), wobei in mindestens einer der Klemmebenen (100 oder 200) vier beide Klemmfunktionen ausübende Anlagebereiche (8) vorhanden sind, von denen jeweils zwei paarweise diametral gegenüberliegend angeordnet sind.

2. Federeinrichtung nach Anspruch 1,
**dadurch gekennzeichnet,**
**daß** bei einer unterschiedlichen Anzahl von Anlagebereichen (8, 10) in den beiden Klemmebenen 100 und 200 diese Anlagebereiche (8, 10) umfangsmäßig gegeneinander versetzt sind.

3. Federeinrichtung nach Anspruch 1 oder 2,
**dadurch gekennzeichnet,**
**daß** bei vier Anlagebereichen (8), von denen je zwei paarweise diametral gegenüberliegen, in einer ersten der Klemmebenen 100 oder 200 und zwei Anlagebereiche (10) in der zweiten dieser Klemmebenen 100 oder 200 die zwei in der einen Klemmebene liegenden Anlagebereiche (10) innerhalb des Bereiches eines Anlagebereiche (8)-Paares der anderen Klemmebene liegen.

4. Federeinrichtung nach einem der vorhergehenden Ansprüche zum Verbinden zweier Flansche (13, 14), von denen mindestens einer eine sphärische Auflagefläche für den dort zur Anlage kommenden Teil der Federeinrichtung aufweist.

## Claims

1. Spring device for connecting two flanges to the ends, in particular, of pipes to be connected to one another, in particular of two pipes of a motor-vehicle exhaust system, having the following features
- the spring device is designed as an elastically flexible clamp having U-shaped, functionally first and second clamping jaws (1, 2) and (4, 5), respectively, situated opposite each other,
- the U-limbs (6, 7) of the functionally first clamping jaws (1 and 2, respectively) lie in two essentially parallel clamping planes (100, 200) of the clamping jaw (1 and 2, respectively),
- the U-limbs (6, 7) of the functionally second clamping jaws (4 and 5, respectively) lie in two essentially parallel clamping planes (400, 500) of the second clamping jaws (4 and 5, respectively),
- the spring device is designed in one piece with a spring back region (3) and consists exclusively of the elastically flexible clamp,
- the first and second clamping jaws (1, 2 and 4, 5, respectively) have respective pivot axes (S1 and S2, respectively) which intersect each other in the spring back region (3) at right angles in a common plane,
- in an expanded state by pivoting about the pivot axis S1 of the functionally first clamping jaws (1, 2) and also at least of one of the functionally second clamping jaws (4, 5) by pivoting about the pivot axis (S2), the clamp can be pushed onto the mutually remote end surfaces of the flanges (13, 14) with a clamping force desired for the flange connection,
- the U-limbs (6, 7) of the clamping jaws (1, 2; 4, 5) for the first and/or second function of these clamping jaws (1, 2; 4, 5) have, in the respective clamping planes (100, 200, 400 and 500), regions (8, 9, 10), which are only locally tightly restricted, for a direct bearing against the parts (11, 13; 12, 14) which are to be connected to one another by the clamp, there being in at least one of the clamping planes (100 or 200) four bearing regions (8) which exert the two clamping functions and of which in each case two are arranged in pairs diametrically opposite each other.

2. Spring device according to Claim 1, **characterized in that** when there is a different number of bearing regions (8, 10) in. the two clamping planes 100 and 200, the said bearing regions (8, 10) are offset circumferentially with respect to one another.

3. Spring device according to Claim 1 or 2, **characterized in that** in the case of four bearing regions (8), of which in each case two lie in pairs diametrically opposite each other in a first of the clamping planes 100 or 200 and two bearing regions (10) in the second of these clamping planes 100 or 200, the two bearing regions (10) lying in the one clamping plane lie within the region of a pair of bearing regions (8) of the other clamping plane.

4. Spring device according to one of the preceding claims for connecting two flanges (13, 14), of which at least one has a spherical support surface for that part of the spring device which comes to bear there.

## Revendications

1. Dispositif à ressort pour assembler deux brides de tuyaux à assembler entre eux notamment sur les extrémités, en particulier de deux tuyaux d'un circuit d'évacuation des gaz d'échappement d'un véhicule automobile, avec des caractéristiques suivantes :
- le dispositif à ressort est réalisé sous forme d'une pince élastiquement flexible avec des premières et des deuxièmes mâchoires de serrage fonctionnelles (1, 2) et/ou (4, 5) en vis-à-vis, en forme de U,
- les branches en U (6, 7) des premières mâchoires de serrage fonctionnelles (1 et/ou 2) se situent dans deux plans de serrage (100, 200), essentiellement parallèles entre eux, de la mâchoire de serrage (1 et/ou 2),
- les branches en U (6, 7) des deuxièmes mâchoires de serrage fonctionnelles (4 et/ou 5) se situent dans deux plans de serrage (400, 500), essentiellement parallèles entre eux, des deuxièmes mâchoires de serrage (4 et/ou 5),
- le dispositif à ressort est réalisé d'une seule pièce avec une zone arrière de ressort (3) et se compose exclusivement de la pince élastiquement flexible,
- les premières et deuxièmes mâchoires de serrage (1, 2 et/ou 4, 5) présentent respectivement des axes de pivotement (S1 et/ou S2), qui se croisent en angle droit dans un plan commun dans la zone arrière (3) du ressort,
- à l'état d'élargissement, la pince peut être emmanchée sur les surfaces frontales mutuellement opposées des brides (13, 14), avec la force de serrage requise pour l'assemblage par brides, par pivotement autour de l'axe S1 des premières mâchoires de serrage fonctionnelles (1, 2), ainsi que d'au moins l'une des deuxièmes mâchoires de serrage fonctionnelles (4, 5) par pivotement autour de l'axe (S2),
- les branches en U (6, 7) des mâchoires de serrage (1, 2 ; 4, 5), pour la première et/ou la seconde fonction de ces mâchoires (1, 2 ; 4, 5) dans les plans de serrage respectifs (100, 200, 400 et 500), présentent uniquement des zones étroitement limitées localement (8, 9, 10) pour un appui direct sur les pièces (11, 13 ; 12, 14) à assembler entre elles par la pince, quatre zones d'appui (8) exerçant deux fonctions de serrage, dont deux sont respectivement diamétralement opposées par paires, étant prévues dans au moins l'un des plans de serrage (100 ou 200).

2. Dispositif à ressort suivant la revendication 1, **caractérisé en ce que**, en présence d'un nombre différent de zones d'appui (8, 10) dans les deux plans de serrage 100 et 200, ces zones d'appui (8, 10)sont mutuellement déportées sur le pourtour.

3. Dispositif à ressort suivant l'une des revendications 1 et 2, **caractérisé en ce que**, en présence de quatre zones d'appui (8), dont deux sont respectivement diamétralement opposées par paires, dans l'un des premiers plans de serrage (100 ou 200), et de deux zones d'appui (10) dans le second de ces plans de serrage (100 ou 200), les deux zones d'appui (10) situées dans l'un des plans de serrage se situent à l'intérieur de la zone d'une paire de zones d'appui (8) de l'autre plan de serrage.

4. Dispositif à ressort suivant l'une des revendications précédentes pour l'assemblage de deux brides (13, 14), dont l'une au moins présente une surface d'appui sphérique pour la partie, arrivant en contact à cet endroit, du dispositif à ressort.
